# EUROPÄISCHE PATENTSCHRIFT

(11) **EP 4 605 184 B1**
(45) Veröffentlichungstag und Bekanntmachung des Hinweises auf die Patenterteilung: **16.09.2026**
(21) Anmeldenummer: 23802316.2
(22) Anmeldetag: 04.10.2023
(51) Int. Cl.: B27D 1/04, B27M 3/00, B27D 5/00, B27D 1/10, F16B 11/00, F16B 5/00

(54) **VERFAHREN ZUM VERBINDEN VON HOLZBAUPLATTEN**
METHOD FOR CONNECTING WOODEN STRUCTURAL PANELS
PROCÉDÉ DE LIAISON DE PANNEAUX STRUCTURAUX EN BOIS

(30) Priorität: 18.10.2022 CH 12282022
(43) Veröffentlichungstag der Anmeldung: 27.08.2025
(73) Patentinhaber: Timber Structures 3.0 AG, 3600 Thun (CH)
(72) Erfinder: ZÖLLIG, Stefan, 3600 Thun (CH)
(74) Vertreter: P&TS SA (AG, Ltd.)
(86) Internationale Anmeldenummer: PCT/IB2023/059960
(87) Internationale Veröffentlichungsnummer: WO 2024/084320

(56) Entgegenhaltungen:
- EP-A2- 0 552 510
- DE-A1- 2 915 417
- FR-A1- 2 754 843
- NL-C2- 1 016 005

## Beschreibung

### Technisches Gebiet

Die Erfindung bezieht sich auf grossflächige, tragende Holzbauplatten für das Baugewerbe, sowie auf ein Herstellungsverfahren für grossflächige Holzbauplatten.

### Stand der Technik

Auf Grund seiner Nachhaltigkeit und Beständigkeit ist Holz ein zunehmend attraktiver Baustoff im Baugewerbe. Die spezifischen Eigenheiten dieses natürlichen Rohstoffs stellen allerdings technische Herausforderung für den Holzbau dar, da Beton und Stahl anders einsetzbar und verarbeitbar sind als Holz.

Eine besondere Herausforderung ist die Produktion von grossflächigen, tragenden Holzbauplatten, die beispielsweise in Geschossdecken verwendet werden. In herkömmlichen Bauten wird Beton vor Ort flüssig vergossen, um die Platten oder Decken direkt im Gebäude anzufertigen.

Die im Holzbau eingesetzten Bauplatten sind vorwiegend zweiachsig tragend, um den Belastungskräften, die auf die Platten im Gebäude einwirken, standhalten zu können. Holzbauplatten aus zweiachsig lastabtragenden Holzwerkstoffen sind für den Einsatz im Bau besonders gut geeignet.

Holzmaterial wird üblicherweise vorab in einer industriellen Produktionsstätte zu Platten verarbeitet, um dann vor Ort auf der Baustelle zu einem ausreichend grossen, flächigen Holzbauteil, beispielsweise einer Decke, zusammengesetzt zu werden.

WO2014173633 beschreibt ein Verfahren in dem Holzbauelemente mittels Verklebens über einen Spalt zu tragenden Bauteilen für den Holzbau zusammengesetzt werden. Das Verfahren ermöglicht es, einzelne Platten zu ganzen Geschossdecken vor Ort zusammenzusetzen. NL 1 016 005 C2 beschreibt auch ein Verfahren um Platten zusammenzusetzen und die Präambel des Hauptanspruches.

Das Verkleben der Platten auf der Baustelle erfolgt manuell und ist dementsprechend mit einem erheblichen Arbeits- und Zeitaufwand verbunden.

Um die Anzahl der zu verklebenden Platten vor Ort möglichst gering zu halten, und um somit die Effizienz der Herstellung der Geschossdecken vor Ort zu verbessern, ist es wünschenswert möglichst grossen Platten, die derart dimensioniert sind, dass sie mit konventionellen Lastwagen zur Baustelle transportiert werden können, miteinander zu verbinden. Das Zusammenfügen von grösseren Platten vor Ort ist schneller, da weniger Verbindungen zwischen den einzelnen Platten zu erstellen sind. Der mit dem Anordnen der einzelnen Platten und dem Verkleben der Platten verbundene Arbeitsaufwand ist reduziert, wenn kleinere Platten durch eine geringere Anzahl von grösseren Platten ersetzt werden.

Allerdings sind die räumlichen Dimensionen der Holzbauplatten, die heute industriell produziert werden, aus verfahrenstechnischen und logistischen Gründen limitiert. Dies hat zur Folge, dass Baustellen mit einer grossen Anzahl relativ kleiner Platten beliefert werden, die dann vor Ort zu einem grossflächigen Bauteil zusammengefügt werden. Dies beeinträchtigt allerdings aus den oben-erwähnten Gründen nicht nur die Effizienz der Fertigstellung eines grossflächigen Bauteils aus einer grossen Anzahl von relativ kleinen Platten, sondern erhöht auch den mit dem Be- und Entladen eines Transportfahrzeugs verbundenen Zeit- und Arbeitsaufwand.

Es ist daher wünschenswert, bereits in der Produktionsstätte möglichst grosse Holzbauplatten zu fabrizieren, die derart dimensioniert sind, dass sie mit konventionellen Lastwagen transportiert werden können.

### Darstellung der Erfindung

Es ist ein Ziel der vorliegenden Erfindung, ein Verfahren zu finden, dass die Herstellung von grossflächigen Holzbauplatten in der Produktionsstätte ermöglicht.

Es ist ein weiteres Ziel dieser Erfindung, die Herstellung von Geschossdecken aus Holzwerkstoff effizient zu gestalten. Die Herstellungsmethode soll vorzugsweise mit einem reduzierten Zeit- und/oder Arbeitsaufwand auf der Baustelle verbunden sein.

Es ist ein weiteres Ziel dieser Erfindung, ein alternatives Herstellungsverfahren für bekannte Verfahren zur Erzeugung von grossflächige Holzbauplatten bereitzustellen.

Es ist ein zusätzliches Ziel dieser Erfindung, eine grossflächige Holzbauplatte zu finden, die robust und beständig ist. Die grossflächige Holzbauplatte soll dazu ausgestattet sein, ein lasttragendes Bauteil einer Geschossdecke eines Gebäudes zu bilden.

Erfindungsgemäss werden eines oder mehrere dieser Ziele durch ein Verfahren zur Anfertigung einer zusammengesetzten Holzbauplatte für Gebäudestrukturen, und/oder durch eine zusammengesetzte Holzbauplatte gemäss den unabhängigen Ansprüchen erreicht. Weitere vorteilhafte Ausführungsformen des Verfahrens sowie der zusammengesetzten Holzbauplatte sind in den Unteransprüchen angeführt.

Der hier verwendete Begriff Holzbauplatte bedeutet ein Strukturelement aus einem Holzwerkstoff mit zwei zueinander parallelen Nutzflächen, die je nach Ausrichtung eine Oberseite und eine Unterseite bilden können, und lateralen Seiten, die jeweils kleinere Dimensionen als eine Nutzfläche aufweisen. Die beiden Nutzflächen weisen dieselben Dimensionen auf.

Die Platten können die Form eines flachen Parallelepipeds einnehmen. Die Nutzflächen können die Form eines rechtwinkeligen Vierecks, beispielsweise eines Quadrats einnehmen. Die Holzbauplatten sind vorzugsweise Quader. In den in diesem Absatz angeführten Ausführungen hat die Platte zwei Nutzflächen und vier laterale Seiten.

Allerdings können die Platten auch dreieckige Nutzflächen oder andere vieleckige Nutzflächen aufweisen. Die Anzahl der lateralen Seitenflächen variiert dementsprechend mit der Form der Grundfläche.

Der hier verwendete Begriff Holzwerkstoff bedeutet ein Werkstoff, der aus zusammengefügtem zerkleinertem Holz, beispielsweise durch Verkleben, erzeugt wird. Holzwerkstoffe sind zum Beispiel Kreuzlagenholz, Brettsperrholz, Furniersperrholz, oder Brettschichtholz. Brettsperrhölzer und Kreuzlagehölzer sind auch unter der Bezeichnung *cross-laminated timber* «CLT» bekannt. Holzwerkstoffe, in denen die zerkleinerten Holz-Strukturelemente kreuzweise angeordnet sind, können zweiachsig tragend sein.

Spezifisch werden eines oder mehrere der oben-angeführten Ziele durch ein Verfahren zur Anfertigung zusammengesetzter Holzbauplatten erreicht, in dem eine erste Holzbauplatte mit einer oder mehreren Vertiefungen in einer ersten lateralen Seite, derart in Bezug auf eine zweite Holzbauplatte mit einer ersten lateralen Seite angeordnet wird, dass die beiden ersten lateralen Seiten der Holzbauplatten aneinander anschliessen.

Wahlweise umfasst das Verfahren auch einen Schritt des Ausbildens der Vertiefungen in der ersten laterale Seite der ersten Holzbauplatte.

Jede der einen oder mehreren Vertiefungen in der ersten lateralen Seite der ersten Holzbauplatte ist derart ausgebildet, dass sie sich flächig über einen Teilbereich der ersten lateralen Seite ausdehnt. Vorzugsweise weisen die eine oder mehreren Vertiefungen einen flachen Boden auf.

Die eine oder mehreren Vertiefungen weisen vorzugsweise eine Mindesttiefe von 1 mm, von 2 mm, von 3 mm, von 4mm oder von 5 mm auf. Jede Vertiefung weist vorzugsweise eine gleichmässige Tiefe auf. Das heisst, dass die Tiefe jeder Vertiefung über deren begrenzende Bodenfläche im Wesentlichen konstant ist, sodass der Boden der Vertiefung flach ist.

«Im Wesentlichen konstant» bedeutet, dass der Boden materialbedingte Unebenheiten aufweisen kann, und somit die Tiefe auf Grund dieser materialbedingten Unebenheiten variieren kann. Ein flacher Boden kann somit ebenfalls materialbedingte Unebenheiten aufweisen. Ein flacher Boden ist frei von künstlich eingearbeiteten strukturellen Elementen.

Um die Beständigkeit der flächigen Verklebung der Holzbauplatten zu verbessern, sollten die Vertiefungen gemeinsam vorzugsweise zumindest 50%, zumindest 60%, zumindest 70%, zumindest 80%, zumindest 90%, zumindest 95%, oder zumindest 98% der ersten lateralen Seite einnehmen. Dabei sollten die Vertiefungen nicht mehr als 99% der ersten lateralen Seite einnehmen.

Die Vertiefungen werden vorzugsweise in einem automatisierten Verfahrensschritt erzeugt.

Die Portionen der ersten lateralen Seite, die nicht vertieft sind, umgeben die eine oder mehrere Vertiefungen, um diese zumindest teilweise zu begrenzen. Die Portionen der ersten lateralen Seite, die nicht vertieft sind, sind vorzugsweise derart angeordnet, die beiden seitlichen Kanten, sowie die untere Kante entlang einer der Grundflächen weiterhin aufrechtzuerhalten. Diese Portionen können beispielsweise als Stege der ersten Holzbauplatte ausgebildet sein.

Die erste Holzbauplatte mit der zumindest einen Vertiefung wird derart zu einer zweiten Holzbauplatte angeordnet, dass die Portionen, die die zumindest eine Vertiefung der ersten lateralen Seite der ersten Holzbauplatte begrenzen, an eine erste laterale Seite einer zweiten Holzbauplatte anschliessen.

Die beiden Holzbauplatten werden vorzugsweise derart zusammengefügt, dass ihre aneinander anschliessenden Flächen nicht gegeneinander verschoben werden. Die beiden zusammengefügten Holzbauplatten sind demnach in Bezug aufeinander in ihrer Position fixiert.

Die Anschlussflächen der ersten lateralen Seiten der Holzbauplatten sind vorzugsweise parallel zu dem flachen Boden der ersten Seite der ersten Holzbauplatte. Die Anschlussflächen der jeweils ersten Seiten der beiden Holzbauplatten greifen demnach nicht ineinander ein.

Vorzugsweise weist keine der beiden ersten lateralen Seiten ein strukturelles Element, wie zum Beispiel eine Hervorhebung auf, die sich in eine Vertiefung oder in eine Aussparung der ersten Seite der jeweils anderen Holzbauplatte erstreckt. Das strukturelle Element jeder der beiden Holzbauplatten, das der ersten Seitenfläche der jeweils anderen Holzbauplatte am nächsten liegt, ist vorzugsweise die Anschlussfläche der ersten lateralen Seite jedes der beiden Holzbauplatten.

Die Dimensionen der beiden Holzbauplatten können identisch, oder im Wesentlichen identisch sein.

Die erste und die zweite Holzbauplatte sind zweiachsig tragende Platten aus Holzwerkstoff. Eine zweiachsig tragende Holzbauplatte, ist ein Bauteil aus Holzwerkstoff, das flächig lastabtragend ist.

Sofern die beiden Holzbauplatten jeweils zwei laterale Längsseiten und zwei kürzere laterale Breitseiten aufweisen, werden vorzugsweise die jeweils einander entsprechenden lateralen Seite, das heisst jeweils eine laterale Längsseite oder jeweils eine laterale Breitseite der Holzbauplatten, miteinander verbunden.

Durch diese Anordnung der beiden Holzbauplatten zueinander werden ein oder mehrere Hohlräume gebildet, die von dem Boden der zumindest einen Vertiefung, den die Vertiefung begrenzenden Portionen der Holzbauplatte, sowie der ersten lateralen Seite der zweiten Holzbauplatte begrenzt werden.

Die beiden Holzbauplatten können maschinell in einem automatisierten Verfahren zueinander angeordnet werden.

Die aneinander anschliessenden Flächen werden vorzugsweise an zumindest drei Aussenseiten abgedichtet. Optional werden die beiden seitlichen Kanten, sowie der unteren Kante der aneinander anschliessenden ersten lateralen Seiten der ersten und der zweiten Holzbauplatte abgedichtet.

Das Abdichten kann durch auftragen einer Dichtmasse, beispielsweise eines Klebstoffes oder Silikon, auf die Anschlussflächen der begrenzenden Portionen der ersten Holzbauplatte, vor dem Schritt des Anordnens der beiden Holzbauplatten erfolgen. Durch das wie oben beschriebene Zusammenfügen der beiden Holzbauplatten werden die aneinander anschliessenden Flächen der beiden Holzbauplatten durch die Dichtmasse abgedichtet.

Das Abdichten kann auch nach dem Anordnen der beiden Holzbauplatten zueinander und vor dem Befüllen des zumindest einen Hohlraums mit Klebstoff erfolgen.

Es ist auch möglich, dass eine Dichtmasse vor dem Anordnen auf die begrenzenden Portionen der ersten Holzbauplatte aufgetragen wird und dann nach dem Anordnen zusätzlich abgedichtet wird, beispielsweise durch auftragen einer Dichtemasse entlang zumindest eines Teils der Kanten der zusammengefügten Flächen.

Das Abdichten der aneinander anschliessenden Portionen der ersten und der zweiten Holzbauplatten kann automatisiert sein.

Die von den Vertiefungen gebildeten, durch die zusammengefügten Holzbauplatten gebildeten Hohlräume können sodann mit einem Zweikomponenten Klebstoff befüllt werden. Um die Stabilität der Verklebung zu gewährleisten, sollten die Hohlräume vollständig mit Klebstoff befüllt werden. Die Bildung von Luftblasen sollte vermieden werden.

Das Befüllen der Hohlräume wird vorzugsweise automatisiert in einer Produktionsstätte vorgenommen. Das Befüllen kann aber auch manuell, beispielsweise auf einer Baustelle, vorgenommen werden.

Für die Stabilität der Verbindung ist es wichtig, dass der eingefüllte Klebstoff einen Mindestabstand zwischen den verklebten Flächen der beiden Holzbauplatten aufweist. Dieser Mindestabstand beträgt mindestens 1 mm, 2 mm, 3 mm, 4mm, oder 5 mm und ist durch die Vertiefungen, beziehungsweise den zumindest einen Hohlraum bilden, vorgegeben. Der Abstand zwischen den verklebten Flächen ist beispielsweise nicht grösser als 20mm. Allerdings sind auch grössere Abstände zwischen den verklebten Flächen zum Ausbilden einer tragenden Verbindung zwischen den beiden Holzbauplatten geeignet.

Ein Mindestabstand von 3mm hat den Vorteil, dass Luftblasen besser vermieden werden können. In Abständen von weniger als 3mm können durch eine Injektion eines Zweikomponenten Klebstoffes in die Fuge sehr leicht Luftblasen eingeschlossen werden.

Der Mindestabstand zwischen den verklebten Flächen ist für die Stabilität der Verklebung ausschlaggebend. Die im Abstand befindliche, ausgehärtete Zweikomponenten Klebstoffschicht kann eine Belastungskraft, die in eine der beiden Platten eingeleitet wird über diesen Abstand in der verklebten Platte übertragen. Ein zu geringer Abstand führt allerdings dazu, dass ist die Kraftübertragung zwischen den verklebten Platten reduziert wird. Bis 20mm nimmt die Fähigkeit zur Kraftübertragung mit der Distanz zwischen den verklebten Flächen zu.

Tendenziell nimmt die Fugenfestigkeit mit zunehmender Dicke der Klebstoffschicht zu. Wie erwähnt kann in Fugen von 3mm und grösser ein Lufteinschluss weitgehend vermieden werden, was zur verbesserten Qualität der verklebten Verbindung beiträgt.

Der eingefüllte Zweikomponentenklebstoff härtet sodann ohne Ausüben eines Pressdrucks in dem zumindest einen Hohlraum, sodass eine robuste Verbindung zwischen den beiden Holzbauplatten erstellt wird. Es ist wichtig, dass der in den zumindest einen Hohlraum eingefüllte Zweikomponenten Klebstoff während des Aushärtens nicht komprimiert wird, da ein Komprimieren des Klebstoffes während des Aushärtens die Fähigkeit des Klebstoffschicht zur Kraftübertragung beeinträchtigen kann.

Die erste laterale Seite der zweiten Holzbauplatte kann ebenfalls eine oder mehrere Vertiefungen aufweisen. Vorzugsweise entsprechen diese Vertiefungen den Vertiefungen der ersten Holzbauplatte in ihrer Anordnung, sodass die Oberflächen der jeweiligen Portionen der ersten und der zweiten Holzbauplatte, die die jeweiligen Vertiefungen begrenzen, in den wie oben beschrieben angeordneten Holzbauplatten aneinander anschliessen. In den angeordneten Holzbauplatten können sodann jeweils eine Vertiefung der ersten Holzbauplatte und eine entsprechende Vertiefung der zweiten Holzbauplatte gemeinsam einen Hohlraum bilden. Diese Ausführung hat den Vorteil, dass der Hohlraum über beide Platten verteilt ist. Die Vertiefungen in den ersten lateralen Seiten der beiden Holzbauplatten können daher jeweils eine geringe Tiefe aufweisen, um dennoch eine stabile Verklebung der beiden Platten über einen vorgegebenen Mindestabstand zu erreichen.

Die erste laterale Seite der zweiten Holzbauplatte kann allerdings auch einheitlich eben sein. Dies hat den Vorteil, dass die Vertiefungen in der ersten Holzplatte nicht mit der Anordnung von Vertiefungen in der ersten lateralen Seite der zweiten Holzplatte übereinstimmen müssen. Die Anordnung der zumindest einen Vertiefung in der ersten lateralen Seite der ersten Holzbauplatte kann daher weniger präzise sein. Aus verfahrenstechnischer Sicht ist diese Ausführung weniger aufwendig und daher bevorzugt.

Sofern der zumindest eine Hohlraum dreiseitig abgedichtet ist, kann dieser von oben mit Klebstoff befüllt werden. Allerdings können während eines Befüllens von oben sehr leicht Luftblasen eingeschlossen werden, wodurch Qualität der Verbindung verringert wird.

Um dem Vorzubeugen, sollte der zumindest eine Hohlraum von unten oder durch eine in seinem unteren Bereich mündende Einfüllöffnung befüllt werden. Eine transversale Einfüllöffnung, die sich von der oberen Nutzfläche einer der beiden Platten bis in den unteren Bereich eines Hohlraumes erstreckt ist dazu sehr gut geeignet. Die Einfüllöffnung kann beispielsweise eine Bohröffnung sein.

Ein Zweikomponenten Polyurethan ist besonders gut zur Ausbildung einer kraftübertragenden Klebstoffschicht geeignet. Ein Zweikomponenten Polyurethan kann auch sehr gut in die Hohlräume vergossen werden.

In einer möglichen Ausführung sind der oder die Hohlräume von allen lateralen Seiten von begrenzenden Portionen der ersten Holzbauplatte, oder von begrenzenden Portionen der ersten und der zweiten Holzbauplatte, umgeben. In anderen Worten, der oder die Hohlräume zwischen der ersten und der zweiten Holzbauplatte werden vollumfänglich von begrenzenden Portionen der ersten und, optional, von begrenzenden Portionen der zweiten Holzbauplatte umfasst. Der Begriff vollumfänglich schliesst allerdings die Anwesenheit einer Entlüftungsöffnung in einer der begrenzend Portionen, die in einen Hohlraum mündet, nicht aus.

Ein Umschliessen des oder der Hohlräume von allen Seiten verhindert, dass Verschmutzungen in den Hohlraum oder in die Klebstoffschicht eindringen. Verschmutzungen können die Klebstoffschicht und somit die Verbindung der Platten zueinander schwächen. Des Weiteren wird mit einer geschlossenen Ausführung des oder der Hohlräume verhindert, dass die Klebstoffschicht über eine offene Fuge adversen chemischen oder mechanischen Umwelteinflüssen, wie zum Beispiel Reinigungsmitteln oder Bürsten, ausgesetzt sind. Die Klebstoffschicht ist im geschlossenen Hohlraum somit gegenüber der Aussenwelt geschützt. Dies trägt zur Beständigkeit der Verklebung der Holzbauplatten bei.

In der geschlossenen Ausführung schliessen die Nutzflächen der beiden Holzbauplatten vorzugsweise bündig aneinander an. Dies trägt nicht nur zu den oben angeführten Vorteilen des geschlossenen Hohlraums bei, sondern ist auch optisch vorteilhaft, da ein einheitliches Erscheinungsbild der zusammengesetzten, grossflächigen Platte geschaffen wird.

In dieser geschlossenen Ausführung wird allerdings ein Entweichen der in dem Hohlraum befindlichen Luft während dem Befüllen verhindert. Aus diesem Grund muss in dieser Ausführung eine oder mehrere Entlüftungsöffnungen, die angeordnet sind, um ein Entweichen der im Hohlraum befindlichen Luft zu ermöglichen, vorgesehen sein. Die Entlüftungsöffnung kann beispielsweise eine in den Hohlraum mündende Bohröffnung sein.

Ein Teil oder alle Schritte des hier beschriebenen Verfahrens werden vorzugsweise in einer industriellen Produktionsanlage durchgeführt. Das Verfahren ist für eine vollständige Automatisierung geeignet und ermöglicht daher die Fabrikation von zusammengesetzten Platten im industriellen Massstab. Die erzeugten Holzbauplatten sind somit grösser und nicht an die Dimensionen industriell erzeugter Einzelplatten gebunden.

Die Erfindung betrifft auch eine zusammengesetzte Holzbauplatte, die entsprechend dem hier beschriebenen Verfahren erzeugt werden kann.

Die zusammengesetzte Holzbauplatte weist eine erste Holzbauplatte mit einer oder mehreren, sich über einen Teilbereich einer ersten lateralen Fläche ausdehnenden Vertiefungen, sowie eine zweite Holzbauplatte mit einer ersten lateralen Fläche, die an die erste laterale Fläche der ersten Holzbauplatte anschliesst auf.

Die erste und die zweite Holzbauplatte bilden gemeinsam einen oder mehrere durch die Vertiefungen bedingten Hohlräume. Der Abstand zwischen der den Hohlraum begrenzenden Boden der zumindest einen Vertiefung der ersten Holzbauplatte und der den Hohlraum begrenzenden Fläche der zweiten Holzbauplatte beträgt zumindest 1 mm, zumindest 2 mm, zumindest 3mm, zumindest 4 mm, oder zumindest 5 mm. Der Hohlraum ist vollständig mit einem Zweikomponentenklebstoff, beispielsweise mit einem Zweikomponenten Polyurethan, vergossen.

In der zusammengesetzten Holzbauplatte dieser Erfindung schliesst zumindest eine der beiden Nutzflächen der ersten Holzbauplatte an zumindest eine der beiden Nutzflächen der zweiten Holzbauplatte an. In einer bevorzugten Ausführung schliessen beide Nutzflächen der ersten Holzbauplatte jeweils an die entsprechenden Nutzflächen der zweiten Holzbauplatte an.

Eine oder beide der Nutzflächen der ersten und der zweiten Holzbauplatte schliessen vorzugsweise bündig aneinander an. Es ist allerdings auch möglich, dass ein Dichtungsmaterial, beispielsweise Silikon, zwischen den aneinander angrenzenden Kanten der Nutzflächen sichtbar eingelagert ist.

Die zusammengesetzte Holzbauplatte weist vorzugsweise eine zusammengesetzte Nutzfläche von 1m² bis 50m², oder von 10m² bis 34m² auf. Die Holzbauplatten, sowie die resultierende zusammengesetzte Holbauplatte, können eine Schichtdicke von 6cm bis 40cm, vorzugsweise von 10cm bis 32cm aufweisen. Die zusammengesetzte Holzbauplatten können eine zusammengesetzte Länge von 1 m bis 15 m, oder von 1 m bis 13.5 m aufweisen. Die zusammengesetzte Holzbauplatten können eine zusammengesetzte Breite von 0.5 m bis 2.5 m, oder von 0-5 m bis 3.5 m aufweisen.

Die Länge und Breite der zusammengesetzten Holzbauplatten können an die durch das konventionelle Transportmittel vorgegebenen Dimensionen angepasst werden.

Holzplatten können mit diesen Ausmassen sind gut mit konventionellen Verkehrsmitteln transportiert werden. Beispielsweise haben europäische konventionelle Sattellastwagen eine Gesamtlänge von maximal 16.5 m. Die Länge des Sattelanhängers beträgt ungefähr 13.6m, seine Breite ungefähr 2.5 m.

Vorzugsweise wird das hier beschriebene Verfahren an einem ersten Ort, beispielswiese einer Produktionsanlage, durchgeführt. Die zusammengesetzten Holzbauplatten gemäss diesem Verfahren können hierauf zu einem zweiten Ort, an dem die zusammengesetzte Platte ihren Einsatz findet, gebracht werden. Dieser zweite Ort ist beispielsweise eine Baustelle oder in einem bestehenden Gebäude, in dem die zusammengesetzte Holzbauplatte eingebaut wird. Die zusammengesetzte Holzbauplatte wird vorzugsweise mit einem konventionellen Verkehrsmittel, beispielsweise mit einem Güterzug und/oder einem konventionellen Lastwagen zu ihrem Anwendungsort transportiert.

### Kurze Beschreibung der Figuren

Die Erfindung wird anhand der beigefügten Figuren näher erläutert, wobei zeigen
**Figuren 1a bis 1e****,** sowie **2a und 2b** sind Darstellungen möglicher Ausführungsbeispiele einer zusammengesetzten Holzbauplatte, in der jeweils die oberen und die unteren Nutzflächen der beiden verklebten Platten bündig aneinander anschliessen.
**Figur 1a** ist eine Draufsicht auf die zusammengefügte Holzbauplatte, zwei von der Nutzfläche verborgene Vertiefungen sind mit einer gestrichelten Linie angedeutet;
**Figur 1b** ist eine Detailansicht der Verbindungsstelle der beiden Holzbauplatten des Figur 1a, wobei wiederum die unterhalb der Nutzfläche verborgene Vertiefung gestrichelt angedeutet ist;
**Figur 1c** ist eine A-A Querschnittsansicht der in Figure 1a dargestellten Ausführung der zusammengesetzten Holzbauplatte;
**Figur 1d** ist eine schematische Ansicht der ersten lateralen Seite der ersten Holzbauplatte mit zwei Vertiefungen, und
**Figur 1e** zeigt die mit Klebstoff befüllten Vertiefungen der in Figur 1d dargestellten ersten lateralen Seite der ersten Holzbauplatte.
**Figur 2a** ist ein Ausführungsbeispiel, in dem die Vertiefungen entlang der lateralen Längsseite, die in dieser Ausführung die erste laterale Seite ist, angeordnet sind, und
**Figur 2b** ist eine perspektivische Darstellung des in Figuren 1a bis 1e abgebildeten Ausführungsbeispiels, in dem die Vertiefungen entlang der lateralen Breitseite, die in dieser Ausführung die erste laterale Seite ist, angeordnet sind.
**Figuren 3a bis 3e****,** sowie **4a und 4b** sind Darstellungen möglicher Ausführungsbeispiele einer zusammengesetzten Holzbauplatte, in der die jeweils unteren Nutzfläche der beiden verklebten Platten bündig aneinander anschliessen, während zwischen den oberen Nutzflächen ein durch die Vertiefung bedingte Abstand besteht.

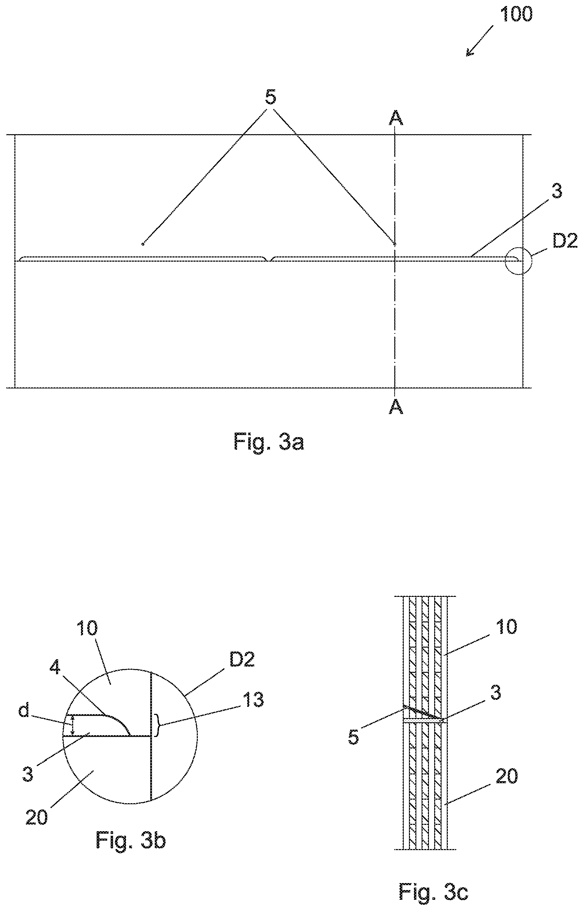

**Figur 3a** ist eine Draufsicht auf die zusammengefügte Holzbauplatte, die beiden mit Klebstoff befüllten Vertiefungen sind nach oben offen, sodass der Klebstoff sichtbar ist;
**Figur 3b** ist eine Detailansicht der Verbindungsstelle der beiden Holzbauplatten der Figur 3a, wobei der durch die Vertiefung gebildete Abstand erkennbar ist;
**Figur 3c** ist eine A-A Querschnittsansicht der in Figure 3a dargestellten Ausführung der zusammengesetzten Holzbauplatte;

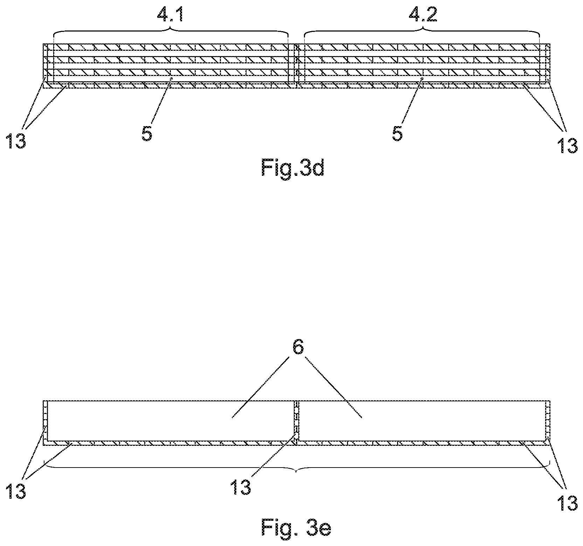

**Figur 3d** ist eine schematische Ansicht der ersten lateralen Seite der ersten Holzbauplatte mit zwei Vertiefungen, und
**Figur 3e** zeigt die mit Klebstoff befüllten Vertiefungen der in Figur 3d dargestellten ersten lateralen Seite der ersten Holzbauplatte.

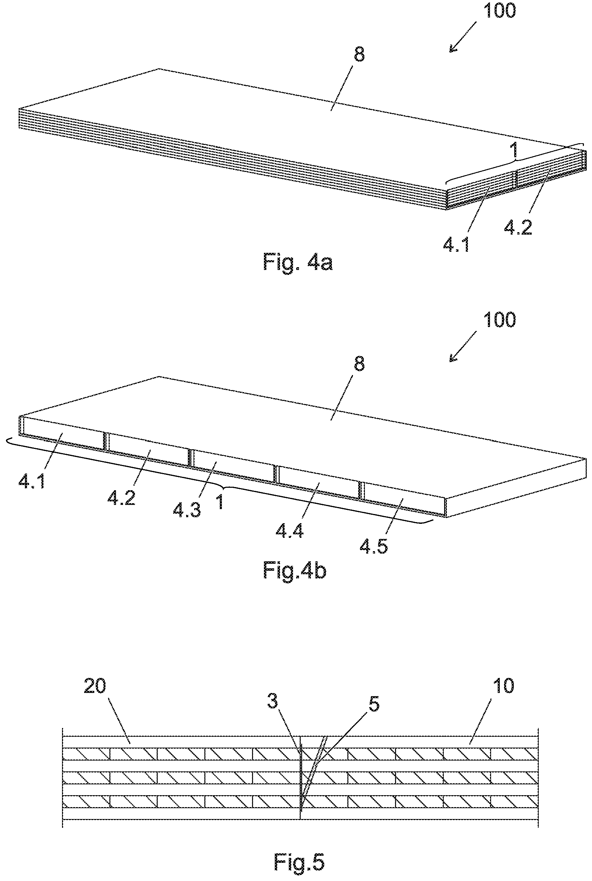

**Figur 4a** ist ein Ausführungsbeispiel, in dem die Vertiefungen entlang der lateralen Längsseite, die in dieser Ausführung die erste laterale Seite ist, angeordnet sind, und
**Figur 4b** ist eine perspektivische Darstellung des in Figuren 3a bis 3e abgebildeten Ausführungsbeispiels, in dem die Vertiefungen entlang der lateralen Breitseite, die in dieser Ausführung die erste laterale Seite ist, angeordnet sind.

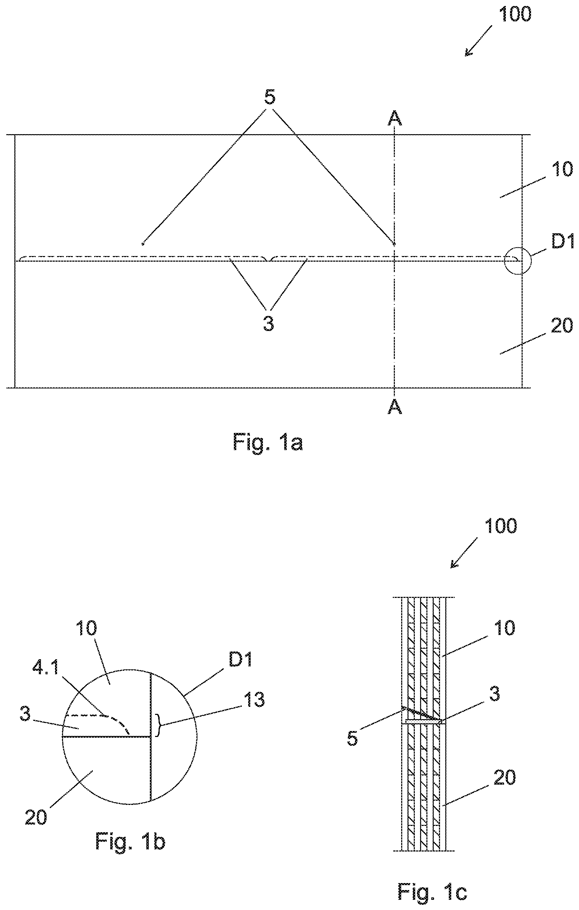

**Figur 5** ist eine Teilansicht eines Querschnitts durch eine zusammengesetzte Platte auf Höhe einer transversalen Einfüllöffnung des in Figuren 1a bis 1e dargestellten Ausführungsbeispiels.

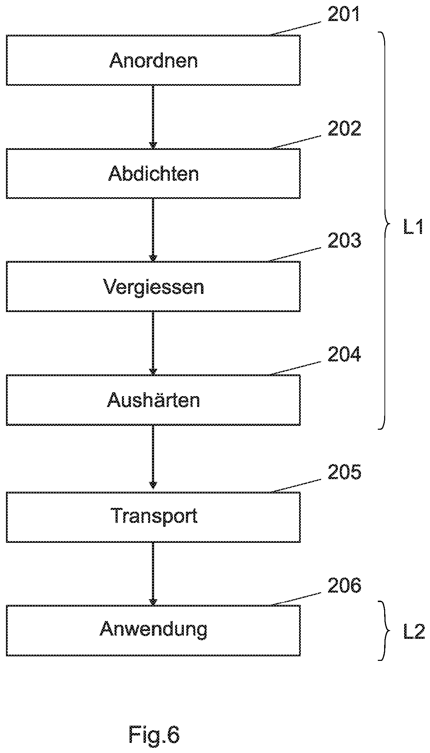

**Figur 6** ist ein Ablaufdiagramm, in dem einzelne Verfahrensschritte einer bevorzugten Ausführung dieser Erfindung dargestellt sind.

### Wege zur Ausführung der Erfindung

Die erfindungsgemässe Ausführung der Erfindung wird anhand der Figuren veranschaulicht.

Die in den Figuren dargestellten Holzbauplatten sind zweiachsig tragende Platten aus Holzwerkstoff. Die in Figuren 1c, 1d, 1e, 3c, sowie 5 dargestellten Platten sind Brettsperrholzplatten, wobei die stirnseitigen Flächen der alternierenden Lagen mit Schrägstreifen, und die parallel zur Hauptfaserrichtung ausgerichteten Flächen der alternierenden Lagen in weiss dargestellt sind.

In Figuren 1a bis 1e ist ein erstes Ausführungsbeispiel eines gemäss dem dieser Erfindung verklebten, zusammengesetzten Holzbauteils 100 schematisch dargestellt. Zwei Holzbauplatten 10, 20 sind über zwei mit Klebstoff 6 befüllten Hohlräume 3, die zwischen den Anschlussseiten der beiden Holzbauplatten ausgebildet ist, miteinander verbunden.

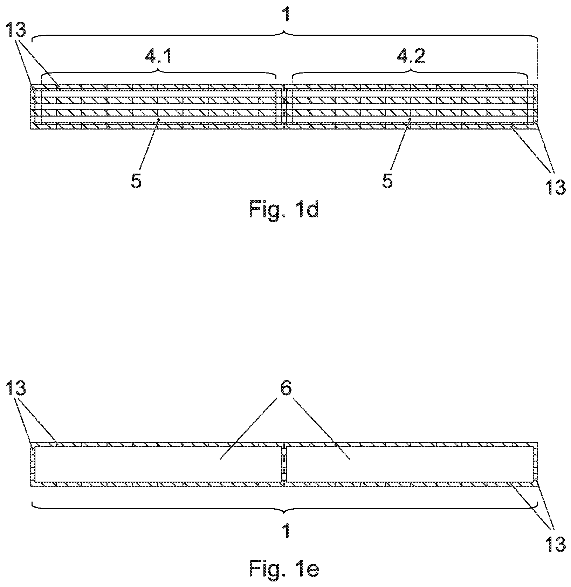

Um diese Hohlräume zu schaffen, wird die eine erste Holzbauplatte 10 an einer ersten lateralen Seite 1 mit zwei Vertiefungen 4.1, 4.2 versehen, wie in Figur 1e dargestellt.

Die Vertiefungen 4.1, 4.2 werden seitlich von nicht vertieften Portionen 13 der ersten lateralen Seite 1 begrenzt. Diese Portionen 13 können die Vertiefung über deren gesamten Umfang umgeben. In anderen Worten, die Portionen 13 der ersten lateralen Seite der ersten Holzbauplatte können alle lateralen Seiten eines durch eine Vertiefung vorgegebenen Hohlraums 3 umfassen.

Um den oder die Hohlräume mit Klebstoff zu befüllen sind vorzugsweise transversale Einfüllöffnungen 5 vorgesehen, die sich von der oberen Nutzfläche 8 der ersten Bauplatte in jeweils eine Vertiefung 4.1, 4.2 der ersten lateralen Seite 1 erstrecken.

Vorzugsweise münden die Einfüllöffnungen 5 in einem unteren Bereich, vorzugsweise im unteren Viertel, eines Hohlraumes 3, wie in Figur 1c dargestellt. Diese Anordnung bewirkt, dass der Hohlraum von unten nach oben befüllt wird, wodurch ein Luftblaseneinschluss vermieden wird.

Ein Befüllen des Hohlraumes 3 von oben ist weniger geeignet, da hierdurch sehr leicht Luftblasen in der Klebstoffschicht eingeschlossen werden.

Die eine oder mehrere Vertiefungen können beispielsweise in die erste laterale Seite der ersten Holzbauplatte gefräst werden. Vorzugsweise werden die Vertiefungen in einem automatisierten, industriellen Verfahren erzeugt.

Die Anzahl der Vertiefungen, beziehungsweise der durch die Vertiefungen vorgegebenen Hohlräume, ist nicht spezifisch limitiert. Die Anzahl der Vertiefungen kann mit zunehmender Länge der ersten lateralen Seite zunehmen.

Allerdings müssen sich die Hohlräume 3 flächig über einen Teilbereich der ersten Seite ausdehnen und zum Befüllen mit einem Zweikomponenten Klebstoff geeignet sein.

Um ein Auslaufen des Zweikomponenten Klebstoffes aus dem zumindest einen Hohlraum 3 zu vermeiden, müssen die den Hohlraum umgebenden, aneinander anschliessenden Flächen der ersten und der zweiten Holzbauplatte zumindest dreiseitig, das heisst nach unten und seitlich, nach aussen abgedichtet sein.

Des Weiteren sollten die Vertiefungen 4.1, 4.2, 4.n eine Mindesttiefe aufweisen, um die Ausbildung einer Klebstoffschicht einer Schichtdicke von mindestens 1mm, mindestens 2mm, mindestens 3mm, mindestens 4mm oder mindestens 5mm zu ermöglichen.

Der durch die Vertiefung geschaffene Abstand zwischen den beiden verklebten Flächen der Holzbauplatten soll den Mindestabstand nicht unterschreiten, da dies die Stabilität der Verklebung beeinträchtigt. Um eine Kraftübertragung zwischen den beiden Holzbauplatten zu ermöglichen, müssen die beiden Platten flächig über einen Mindestabstand verklebt sein.

Der Mindestabstand bewirkt, dass eine Zweikomponenten Klebstoffschicht ausgebildet werden kann, die eine ausreichende Schichtdicke aufweist, um die in eine Holzplatte eingeleiteten Kräfte vollständig zur anderen Holzbauplatte übertragen zu können. Somit wird die Belastungskraft, der eine der Platten ausgesetzt ist, homogen über die Gesamtfläche der zusammengesetzten Holzbauplatte verteilt. Es besteht also keine abrupte Belastungskraftdifferenz zwischen den beiden Holzbauplatten. Da ein abrupter Unterschied der einwirkenden Belastungskraft an der Verbindungsstelle der beiden Platten so vermieden wird, ist die Verbindung auf Grund des Mindestabstandes zwischen den verklebten Flächen stabiler.

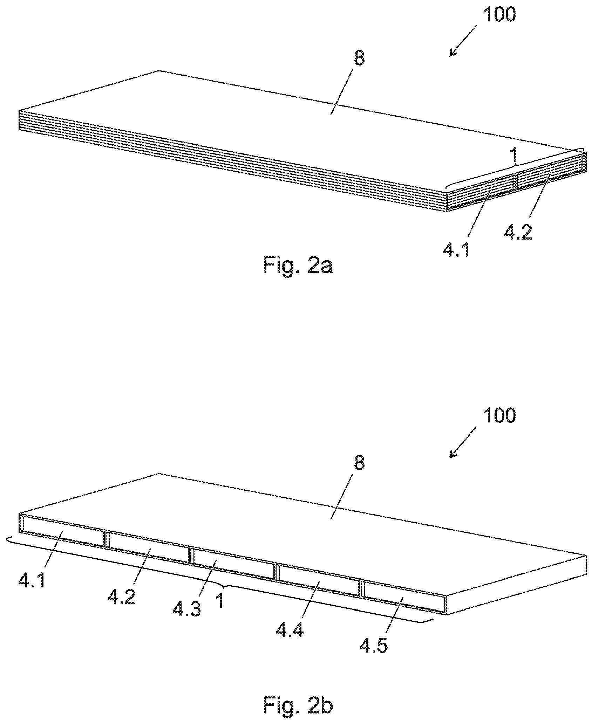

Die eine oder mehrere Vertiefungen 4.1, 4.2, 4.n sind in der ersten lateralen Seite 1 der ersten Holzbauplatte 10 angeordnet. Die erste laterale Seite kann eine Breitseite, wie dies in Figuren 2a und 4a dargestellt ist, oder eine Längsseite, wie dies in Figuren 2b und 4b dargestellt ist, sein. Die Vertiefungen 4.1, 4.2, 4.3, 4.4, 4.5 können dementsprechend in einer Längsseite der ersten Holzbauplatte ausgebildet sein. Die Vertiefungen 4.1, 4.2 können auch in einer Breitseite der ersten Holzbauplatte ausgebildet sein.

Vorzugsweise wird eine Holzbauplatte durch das Anfügen einer zweiten Holzbauplatte in lediglich entlang einer Dimension vergrösstert, In anderen Worten, die Holzbauplatte wird durch das Verkleben mit einer zweiten Holzbauplatte gemäss dieser Erfindung entweder verlängert oder verbreitert.

Es ist aber auch möglich, dass eine Holzbauplatte in zwei Dimensionen vergrössert wird. Zu diesem Zweck kann beispielsweise eine dritte Holzbauplatte an einer zweiten lateralen Seite der ersten oder der zweiten Holzbauplatte, die nicht parallel zur ersten Seite ist, über einen oder mehrere Hohlräume verklebt werden. Der oder die Hohlräume werden durch eine oder mehrere Vertiefungen, die in zumindest einer der miteinander verklebten lateralen Seiten ausgebildet sind, vorgegeben.

Um die beiden Platten zusammenzufügen, wird die erste laterale Seite 1 der ersten Holzbauplatte 10 and eine entsprechende erste laterale Seite einer zweiten Holzbauplatte 20 angeordnet. Die erste laterale Seite der zweiten Holzbauplatte 20 ist in den dargestellten Ausführungsbeispielen eine flache Seite ohne Vertiefungen.

Es ist allerdings auch möglich, dass die erste laterale Seite der zweiten Holzbauplatte 20 ebenfalls Vertiefungen aufweist. In dieser Ausführung müssen die Vertiefungen der beiden Platten derart ausgeführt und in der zusammengesetzten Holzbauplatte derart angeordnet sein, dass jeweils eine Vertiefung der ersten Holzbauplatte und eine Vertiefung der zweiten Holzbauplatte gemeinsam einen Hohlraum 3 bilden.

Eine mögliche Ausführung einer zusammengesetzten Holzbauplatte 100, in der die lateralen Seiten des zumindest einen Hohlraums 3 vollumfänglich nach Aussen von Portionen 13 der ersten Holzbauplatte umfasst wird, ist in den Figuren 1a bis 1e und Figuren 2a und 2b schematisch dargestellt. In diesen Figuren werden alle Seitenwände einer Vertiefung von den begrenzenden Portionen 13 der ersten Holzbauplatte 10 gebildet. Ein derartiger Hohlraum wird hier als geschlossener Hohlraum bezeichnet.

Diese Ausführung hat den Vorteil, dass der oder die Hohlräume 3 der zusammengesetzten Holzbauplatte 100 vollkommen verborgen sind. Mit Ausnahme einer Einfüllöffnung 5 zum Vergiessen des geschlossenen Hohlraumes mit Klebstoff und einer Entlüftungsöffnung (nicht gezeigt), ist die in dem Hohlraum eingefüllte Klebstoffschicht von Aussen unzugänglich und dadurch gegen umweltbedingte Einwirkungen geschützt.

Die Vertiefungen 4,.1, 4.2, die die geschlossenen Hohlräume 3 vorgeben, sind in den Figuren 1a und 1b, die eine Detailansicht D1 der Darstellung der Figur 1a ist, als gestrichelte Linien angedeutet. Allerdings sind die Vertiefungen und geschlossenen Hohlräume in einer zusammengesetzten Holzbauplatte dieses Ausführungsbeispiels von Aussen nicht ersichtlich.

In einer bevorzugten Ausführung schliessen die oberen Nutzflächen 8, sowie die unteren Nutzflächen der beiden Holzbauplatten 10, 20 bündig aneinander an.

Ansichten der ersten lateralen Seite 1 des Ausführungsbeispiels in Figuren 1a bis 1c sind in Figuren 1d und 1e gezeigt, wobei Figur 1d die zwei Vertiefungen 4.1, 4.2 ohne Klebstoff zeigt, und in Figure 1e die mit Klebstoff 6 befüllten Vertiefungen dargestellt sind.

Figuren 3a bis 3e, sowie Figuren 4a und 4b betreffen Ausführungsbeispiele, in denen die begrenzenden Portionen 13 der ersten Seite der ersten Holzplatte die Vertiefungen 4.1, 4.2, 4.n dreiseitig umranden. Ein von einer derartigen Vertiefung vorgegebener Hohlraum zwischen zwei angrenzenden Holzbauplatten wird nachstehend als offener Hohlraum bezeichnet.

Die begrenzenden Portionen 13 bilden die untere Wand zur unteren Nutzfläche, sowie die beiden lateralen Wände der flächigen Vertiefung. Die Vertiefungen sind allerdings nicht gegen die Kante der oberen Nutzfläche begrenzt. Das bewirkt, dass ein durch eine Vertiefung vorgegebener offener Hohlraum 3 nach oben offen ist. In dieser Ausführung besteht zwischen den oberen Nutzflächen 8 der beiden verklebten Holzplatten 10, 20 eine offene Fuge mit einem Abstand d, wie in Figuren 3a und der Detailansicht D2 in Figure 3b dargestellt.

Ansichten der ersten lateralen Seite 1 des Ausführungsbeispiels in Figuren 3a bis 3c sind in Figuren 3d und 3e gezeigt, wobei Figur 3d die zwei Vertiefungen 4.1, 4.2 ohne Klebstoff zeigt, und in Figur 3e die mit Klebstoff 6 befüllten Vertiefungen dargestellt sind.

Figuren 4a und 4b zeigen jeweils erste Holzbauplatten, in denen die Vertiefungen 4.1, 4.2 in einer ersten lateralen Breitseite 1 (Figur 4a), oder in einer in der die Vertiefungen 4.1, 4.2, 4.3, 4.4, 4.5 in einer ersten lateralen Längsseite 1 (Figur 4b) ausgebildet sind.

Figur 5 ist eine Detailansicht eines Querschnittes einer zusammengesetzten Holzbauplatte auf Höhe einer transversalen Einfüllöffnung 5, die in einen geschlossenen Hohlraum 3 mündet. Die Einfüllöffnung erstreckt sich von der oberen Nutzfläche 8 der ersten Holzbauplatte in den unteren Bereich, vorzugsweise das untere Viertel, des Hohlraums 3.

In Figur 6 sind in einem schematischen Ablaufdiagramm einzelne Verfahrensschritte einer bevorzugten Ausführung dieser Erfindung dargestellt.

Die Verfahrensschritte 201 bis 204 werden vorzugsweise an einem ersten Ort L1 durchgeführt. Dieser erste Ort L1 ist vorzugsweise eine Industrieanlage, beispielsweise eine Produktionsstätte für Holzbauplatten.

Eine erste und eine zweite Holzbauplatte werden derart zueinander ausgerichtet, dass ihre jeweiligen zu verklebenden ersten lateralen Seiten aneinander anschliessen 201. Zumindest die erste Holzbauplatte 10 weist, wie hierin beschrieben, eine oder mehrere flächige Vertiefungen 4,1, 4.2, 4.n auf, sodass nur die Oberflächen begrenzenden Portionen 13 der ersten lateralen Seite der ersten Holzbauplatte 10 an die Oberfläche der ersten lateralen Seite der zweiten Holzbauplatte 20 anschliessen. Die Vertiefung sind ausgerichtet, gemeinsam mit der angrenzenden ersten Seite der zweiten Holzbauplatte 20 einen Hohlraum 3 zu bilden.

Aneinander anschliessende Flächen der ersten lateralen Seiten werden abgedichtet 202. Dabei werden zumindest die anschliessenden Flächen derjenigen Portionen der ersten lateralen Seiten abgedichtet, die den oder die Hohlräume 3 der auf seiner unteren Nutzfläche liegenden zusammengesetzten Holzbauplatte seitlich nach Aussen und nach unten begrenzen. Der oder die Hohlräume werden somit zumindest dreiseitig abgedichtet 202.

Zum Abdichten 202 kann beispielsweise ein geeignetes Dichtungsmaterial auf die zumindest eine Vertiefung begrenzende Portion (13) der ersten Holzbauplatte aufgetragen werden. Die mit Dichtungsmaterial behandelte Anschlussfläche der begrenzenden Portion wird dann and die erste Seite der zweiten Holzbauplatte angefügt, sodass sie an diese satt anstösst. Dies kann bereits vor dem Anordnen der beiden Holzbauplatten zueinander geschehen.

Das Abdichten 202 kann allerdings auch erst nach dem Anordnen der beiden Holzbauplatten und vor dem Befüllen des zumindest einen Hohlraumes mit Klebstoff erfolgen.

Die Abdichtung muss dazu geeignet sein, das Auslaufen eines Zweikomponentenklebstoffes zwischen den aneinander anschliessenden Portionen der ersten und der zweiten Holzbauplatte zu verhindern. Ein hierzu geeigneter Klebstoff, oder ein anderes Dichtungsmaterial, beispielsweise Silikon, können zu diesem Zweck eingesetzt werden. Ein Klebstoff als Dichtungsmaterial hat den zusätzlichen Vorteil, dass das Risiko eines Verrutschens der beiden angeordneten Holzbauplatten zueinander verringert wird.

Ein zum Abdichten geeigneter Klebstoff, kann zum Beispiel ein Einkomponenten Klebstoff oder ein Zweikomponenten Klebstoff sein. Zur Ausbildung der Dichtungsverklebung stossen die Anschlussflächen der ersten und der zweiten Holzbauplatte vorzugsweise satt aneinander zusammen. Optional kann die Dichtungsverklebung eine Pressverklebung sein.

In einem nächsten Schritt 203 werden der oder die Hohlräume 3 zwischen den ersten lateralen Seiten der beiden Holzbauplatten vollständig mit einem Zweikomponenten Klebstoff befüllt. Das Vergiessen 203 eines Hohlraums 3 erfolgt vorzugsweise durch eine in einen unteren Bereich des Hohlraums mündende Einfüllöffnung 5.

Das Vergiessen 203 der beiden Holzbauplatten kann durch eine Anordnung mehrerer Hohlräume nebeneinander in der ersten lateralen Seite der ersten Holzbauplatte beschleunigt werden, da durch diese Anordnung ein gleichzeitiges Befüllen der einzelnen Hohlräume möglich ist.

Wahlweise kann das Verfahren auch einen ersten Schritt des Ausbildens einer oder mehrerer Vertiefungen 4.1, 4.2, 4.n in der ersten lateralen Seite 1 der ersten Holzbauplatte 10 umfassen. Wie erwähnt sind die Vertiefungen derart ausgebildet, dass sie sich über einen Teilbereich einer ersten lateralen Seite 1 ausdehnen, und dass sie seitlich zumindest teilweise durch Portionen 13 der ersten Holzbauplatte 10 begrenzt werden. Dieser Schritt kann ebenfalls automatisiert erfolgen.

Vorzugsweise wird dieser optionale initiale Verfahrensschritt an dem ersten Ort L1 durchgeführt. Allerdings können die ersten Holzbauplatten auch an einem anderen Ort mit den Vertiefungen versehen werden. Die ersten Holzbauplatten mit Vertiefungen können dann an den ersten Ort L1 geliefert werden.

Ein Teil der Verfahrensschritte, insbesondere Schritt 202 und/oder 203, oder Verfahrensschritte 201 bis 203 können automatisiert in einer industriellen Produktionsanlage erfolgen. Der Schritt des Ausbildens der Vertiefungen kann ebenfalls automatisiert in derselben industriellen Produktionsanlage erfolgen.

Für das Aushärten des Klebstoffes 204 ist kein zusätzlicher Eingriff nötig, die zusammengesetzten Holzbauplatten ruhen lediglich für eine bestimmte Mindestdauer, die von der Art des Zweikomponenten Klebstoffs, sowie seiner Temperatur abhängt. Wie oben erwähnt, ist es vorteilhaft, wenn die Klebstoffschicht ohne Ausüben eines Pressdrucks aushärtet, da dies zur verbesserten Stabilität der Verbindung beiträgt.

In einem weiteren, optionalen Schritt wird die zusammengesetzte Holzbauplatte von dem ersten Ort L1 zu einen zweiten Ort L2 befördert. Der Transport 205 der Holzbauplatte erfolgt mittels eines konventionellen Gütertransportmittels, beispielsweise konventionell im Baugewerbe verwendeten Lastkraftwagen. Konventionelle Sattelmotorfahrzeuge haben typischerweise eine Gesamtlänge von maximal 16.5 m, wobei die Länge des Anhängers ungefähr 13.6m beträgt.

Der zweite Ort L2 ist der Destinationsort, an dem die zusammengesetzte Holzbauplatte zum Einsatz kommt 206. Dieser Ort L2 kann beispielsweise eine Baustelle, oder ein bestehendes Gebäude sein.

Die Holzbauplatte kann an dem zweiten Ort 2 weiterbearbeitet werde. Beispielsweise können mehrere zusammengesetzte Holzbauplatten 100 miteinander am zweiten Ort L2 zu einer Geschossdecke verklebt werden.

## Patentansprüche

1. Ein Verfahren zur Anfertigung einer zusammengesetzten Holzbauplatte (100) für Gebäudestrukturen, die folgenden Schritte aufweisend
(i) Anordnen (201) einer ersten Holzbauplatte (10) aufweisend eine oder mehrere Vertiefungen (4.1, 4.2, 4.n) in einer ersten lateralen Seite (1) mit einem flachen Boden, der sich über einen Teilbereich der ersten lateralen Seite (1) ausdehnt, wobei die Böden der einen oder mehreren Vertiefungen (4.1, 4.2, 4.n) gemeinsam zumindest 50% der ersten lateralen Seite (1) der ersten Holzbauplatte (10) einnehmen, und wobei die Vertiefungen (4.1, 4.2, 4.n) seitlich zumindest teilweise durch Portionen (13) der ersten Holzbauplatte begrenzt werden, zu einer zweiten Holzbauplatte, sodass die eine oder mehrere die zumindest eine Vertiefung (4.1, 4.2, 4.n) begrenzenden Portionen (13) der ersten Holzbauplatte (10) an eine erste laterale Seite der zweiten Holzbauplatte (20) anschliessen,
(ii) Befüllen (203) der einen oder mehreren Vertiefungen (4.1, 4.2, 4.n) mit einem Zweikomponentenklebstoff,
(iii) Aushärten (204) des Zweikomponentenklebstoffes,
**gekennzeichnet dadurch, dass** die erste und die zweite Holzbauplatte zweiachsig tragende Holzbauplatten sind.

2. Verfahren nach Anspruch 1, aufweisend folgenden zusätzlichen Schritt, der vor dem Schritt (i) des Anordnens (201) durchgeführt wird:
- Ausbilden einer oder mehrerer Vertiefungen (4.1, 4.2, 4.n) in der ersten lateralen Seite (1) der ersten Holzbauplatte (10), sodass sich die eine oder mehrere Vertiefungen (4.1, 4.2, 4.n) über einen Teilbereich einer ersten lateralen Seite (1) ausdehnen, und sodass die eine oder mehrere Vertiefungen (4.1, 4.2, 4.n) seitlich zumindest teilweise durch Portionen (13) der ersten Holzbauplatte (10) begrenzt werden.

3. Verfahren nach einem der Ansprüche 1 oder 2, aufweisend einen zusätzlichen Schritt des
- Auftragens einer Dichtmasse, beispielsweise eines Klebstoffes oder Silikon, auf die Anschlussflächen der begrenzenden Portionen (13) der ersten Holzbauplatte, vor dem Schritt (i) des Anordnens der beiden Holzbauplatten (10, 20),
und/oder des
- Abdichtens (202) der aneinander anschliessenden Flächen der ersten Holzbauplatte (10) und der zweiten Holzbauplatte (20) vor dem Schritt (ii) des Befüllens.

4. Verfahren nach einem der Ansprüche 1 bis 3, wobei aneinander anschliessenden Flächen der ersten Holzbauplatte (10) und der zweiten Holzbauplatte (20) im Schritt (i) derart angeordnet werden, dass sie zueinander fixiert sind.

5. Verfahren nach einem der Ansprüche 1 bis 4, das ein zumindest teilweise automatisiertes Verfahren ist, in dem zumindest der Schritt (ii) des Befüllens (203) der einen oder mehreren Vertiefungen maschinell ausgeführt wird.

6. Verfahren nach einem der Ansprüche 1 bis 5, wobei der oder die flachen Böden der einen oder mehreren Vertiefungen (4.1, 4.2, 4.n) gemeinsam zumindest 60%, zumindest 70%, zumindest 80%, zumindest 90%, zumindest 95%, oder zumindest 98% der ersten lateralen Seite (1) der ersten Holzbauplatte (10) einnehmen.

7. Verfahren nach einem der Ansprüche 1 bis 6, wobei die eine oder mehrere Vertiefungen eine Mindesttiefe von 1 mm, von 2 mm, von 3 mm, von 4mm oder von 5 mm aufweisen.

8. Verfahren nach einem der Ansprüche 1 bis 7, wobei die erste laterale Fläche der zweiten Holzbauplatte (20) entweder eine einheitlich flache Oberfläche, oder eine flache Oberfläche mit einer oder mehreren Vertiefungen aufweist.

9. Verfahren nach einem der Ansprüche 1 bis 8, wobei die erste (10) Holzbauplatte und die zweite Holzbauplatte (20) derart angeordnet werden, dass der zumindest eine durch eine Vertiefung gebildeten Hohlraum (3) zwischen der ersten Holzbauplatte und der zweiten Holzbauplatte vollumfänglich von begrenzenden Portionen (13) der ersten und, optional, von begrenzenden Portionen der zweiten Holzbauplatte (20) umgeben wird.

10. Verfahren nach einem der Ansprüche 1 bis 9, wobei die von der einen oder mehreren Vertiefungen (4.1, 4.2, 4.n) gebildeten Hohlräume (3) zwischen der ersten und der zweiten Holzbauplatte durch Einfüllen des Zweikomponentenklebstoffes in eine Einfüllöffnung (5), die in einer der beiden Holzbauplatten (10, 20) angeordnet ist und die in den Hohlraum (3) mündet, vergossen wird.

11. Verfahren nach einem der Ansprüche 1 bis 10, wobei die erste Holzbauplatte (10) und die zweite Holzbauplatte (20) jeweils zwei laterale Längsseiten und zwei kürzere laterale Breitseiten aufweisen, und wobei die beiden Holzbauplatten (10, 20) jeweils über eine laterale Längsseite der ersten Holzbauplatte (10) und eine laterale Längsseite der zweiten Holzbauplatte (20), oder über eine laterale Breitseite der ersten Holzbauplatte (10) und eine laterale Breitseite der zweiten Holzbauplatte (20) miteinander verbunden werden.

12. Verfahren nach einem der Ansprüche 1 bis 11, wobei das Aushärten (iii), (204) des Zweikomponentenklebstoffes pressdrucklos erfolgt.

13. Verfahren nach einem der Ansprüche 1 bis 12, wobei das Verfahren an einem ersten Ort (L1), beispielswiese in einer Produktionsstätte, durchgeführt wird, und wobei der erste Ort (L1) ein anderer Ort ist, als der Ort (L2), beispielsweise einer Baustelle oder in einem bestehenden Gebäude, an dem die zusammengesetzte Holzbauplatte (100) eingesetzt wird.

14. Zusammengesetzte Holzbauplatte (100) für Gebäudestrukturen, umfassend
(iv) eine erste zweiachsig tragende Holzbauplatte (10) aufweisend eine oder mehrere Vertiefungen (4.1, 4.2, 4.n) in einer ersten lateralen Seite (1) mit einem flachen Boden, der sich über einen Teilbereich der ersten lateralen Seite (1) ausdehnt, wobei die Böden der einen oder mehreren Vertiefungen (4.1, 4.2, 4.n) gemeinsam zumindest 50% der ersten lateralen Seite (1) der ersten zweiachsig tragenden Holzbauplatte (10) einnehmen, und wobei die Vertiefungen (4.1, 4.2, 4.n) seitlich zumindest teilweise durch Portionen (13) der ersten zweiachsig tragenden Holzbauplatte begrenzt werden,
(v) eine zweite zweiachsig tragende Holzbauplatte (20) mit einer ersten lateralen Seite, die an die erste laterale Seite (1) der ersten zweiachsig tragenden Holzbauplatte (10) anschliesst, wobei die erste und die zweite Holzbauplatten gemeinsam einen oder mehrere jeweils durch eine der Vertiefungen (4.1, 4.2, 4.n) bedingten Hohlräume (3) bilden,
(vi) wobei der Abstand zwischen der einen Hohlraum (3) begrenzenden Boden der zumindest einen Vertiefung (4.1, 4.2, 4.n) der ersten zweiachsig tragenden Holzbauplatte (10) und der den Hohlraum (3) begrenzenden Seite der zweiten zweiachsig tragenden Holzbauplatte (20) zumindest 1 mm, zumindest 2 mm, zumindest 3mm, zumindest 4mm oder zumindest 5mm beträgt,
(vii) wobei der zumindest eine Hohlraum (3) vollständig mit einem Zweikomponentenklebstoff befüllt ist, und
(viii) wobei zumindest eine der beiden Nutzflächen (8) der ersten zweiachsig tragenden Holzbauplatte (10) an die entsprechende Nutzfläche (8) der zweiten zweiachsig tragenden Holzbauplatte (20) anschliesst.

## Claims

1. A method for manufacturing an assembled timber panel (100) for building structures, comprising the following steps
(i) arranging (201) a first timber panel (10) comprising one or more recesses (4.1, 4.2, 4.n) in a first lateral side (1) with a flat bottom extending over a portion of the first lateral side (1), wherein the bottoms of the one or more recesses (4.1, 4.2, 4.n) together occupy at least 50% of the first lateral side (1) of the first timber panel (10), and wherein the recesses (4.1, 4.2, 4.n) are laterally bounded at least in part by portions (13) of the first timber panel, in relation to a second timber panel, such that the one or more portions (13) of the first timber panel (10) bounding the at least one recess (4.1, 4.2, 4.n) adjoin a first lateral side of the second timber panel (20),
(ii) filling (203) the one or more recesses (4.1, 4.2, 4.n) with a two-component adhesive,
(iii)curing (204) the two-component adhesive,
**characterized in that** the first and second timber panels are biaxially load-bearing timber panels.

2. The method according to claim 1, comprising the following additional step, which is carried out prior to step (i) of arranging (201):
- forming one or more recesses (4.1, 4.2, 4.n) in the first lateral side (1) of the first timber panel (10) such that the one or more recesses (4.1, 4.2, 4.n) extend over a portion of a first lateral side (1) , and such that the one or more recesses (4.1, 4.2, 4.n) are laterally bounded at least in part by portions (13) of the first timber panel (10).

3. The method according to one of claims 1 or 2, comprising an additional step of
- applying a sealing compound, for example an adhesive or silicone, to the contact surfaces of the delimiting portions (13) of the first timber construction panel, prior to step (i) of arranging the two timber construction panels (10, 20),
and/or
- sealing (202) the adjoining surfaces of the first timber panel (10) and the second timber panel (20) prior to step (ii) of filling.

4. The method according to any one of claims 1 to 3, wherein the adjoining surfaces of the first timber panel (10) and the second timber panel (20) are arranged in step (i) in such a way that they are fixed relative to one another.

5. The method according to any one of claims 1 to 4, which is an at least partially automated method in which at least step (ii) of filling (203) the one or more recesses is performed by machine.

6. The method according to any one of claims 1 to 5, wherein the flat bottoms of the one or more recesses (4.1, 4.2, 4.n) together occupy at least 60%, at least 70%, at least 80%, at least 90%, at least 95%, or at least 98% of the first lateral side (1) of the first timber-based panel (10).

7. The method according to any one of claims 1 to 6, wherein the one or more recesses have a minimum depth of 1 mm, 2 mm, 3 mm, 4 mm or 5 mm.

8. The method according to any one of claims 1 to 7, wherein the first lateral surface of the second timber panel (20) has either a uniformly flat surface or a flat surface with one or more recesses.

9. The method according to any one of claims 1 to 8, wherein the first (10) timber construction panel and the second timber construction panel (20) are arranged such that the at least one cavity (3) formed by a recess between the first timber construction panel and the second timber construction panel is entirely surrounded by boundary portions (13) of the first and, optionally, by boundary portions of the second timber construction panel (20).

10. The method according to any one of claims 1 to 9, wherein the cavities (3) formed by the one or more recesses (4.1, 4.2, 4.n) are filled by pouring the two-component adhesive into a filling opening (5) which is arranged in one of the two timber construction panels (10, 20) and which opens into the cavity (3).

11. The method according to any one of claims 1 to 10, wherein the first timber panel (10) and the second timber panel (20) each have two lateral long sides and two shorter lateral short sides, and wherein the two timber panels (10, 20) are each joined together via a lateral long side of the first timber construction panel (10) and a lateral long side of the second timber construction panel (20), or via a lateral short side of the first timber construction panel (10) and a lateral short side of the second timber construction panel (20).

12. The method according to any one of claims 1 to 11, wherein the curing (iii) (204) of the two-component adhesive takes place without pressure.

13. The method according to any one of claims 1 to 12, wherein the method is carried out at a first location (L1), for example in a production facility, and wherein the first location (L1) is a different location from the location (L2), for example a construction site or an existing building, at which the assembled timber panel (100) is installed.

14. Assembled timber panel (100) for building structures, comprising
(i) a first biaxially load-bearing timber panel (10) having one or more recesses (4.1, 4.2, 4.n) in a first lateral side (1) with a flat bottom extending over a portion of the first lateral side (1), wherein the bottoms of the one or more recesses (4.1, 4.2, 4.n) together occupy at least 50% of the first lateral side (1) of the first biaxially load-bearing timber construction panel (10), and wherein the recesses (4.1, 4.2, 4.n) are laterally bounded at least in part by portions (13) of the first biaxially load-bearing timber construction panel,
(ii) a second biaxially load-bearing timber construction panel (20) having a first lateral side which adjoins the first lateral side (1) of the first biaxially load-bearing timber construction panel (10), wherein the first and second timber construction panels together form one or more cavities (3) defined by one of the recesses (4.1, 4.2, 4.n),
(iii)wherein the distance between the base of the at least one recess (4.1, 4.2, 4.n) of the first biaxially load-bearing timber construction panel (10) and the side of the second biaxially load-bearing timber construction panel (20) defining the cavity (3) is at least 1 mm, at least 2 mm, at least 3 mm, at least 4 mm or at least 5 mm,
(iv)wherein the at least one cavity (3) is completely filled with a two-component adhesive, and
(v) wherein at least one of the two usable surfaces (8) of the first biaxially load-bearing timber panel (10) is contiguous with the corresponding usable surface (8) of the second biaxially load-bearing timber panel (20).

## Revendications

1. Procédé de fabrication d'un panneau assemblé en bois (100) destiné aux structures de bâtiments, comprenant les étapes suivantes
(i) disposer (201) un premier panneau en bois (10) comprenant un ou plusieurs évidements (4.1, 4.2, 4.n) dans un premier côté latéral (1), lesdites évidements présentant un fond plat s'étendant sur une partie du premier côté latéral (1), les fonds du ou des évidements (4.1, 4.2, 4.n) occupant ensemble au moins 50 % du premier côté latéral (1) du premier panneau en bois (10), et les évidements (4.1, 4.2, 4.n) étant délimités latéralement au moins en partie par des portions (13) du premier panneau en bois, par rapport à un deuxième panneau en bois, de telle sorte que la ou les portions (13) du premier panneau en bois (10) délimitant ledit au moins un évidement (4.1, 4.2, 4.n) se raccordent à un premier côté latéral du deuxième panneau en bois (20),
(ii) remplir (203) le ou les évidements (4.1, 4.2, 4.n) avec un adhésif à deux composants,
(iii) durcir (204) l'adhésif à deux composants,
**caractérisé en ce que** les premier et deuxième panneaux en bois sont des panneaux en bois porteurs bidirectionnels.

2. Procédé selon la revendication 1, comprenant l'étape supplémentaire suivante, qui est effectuée avant l'étape (i) de disposition (201) :
- former un ou plusieurs évidements (4.1, 4.2, 4.n) dans le premier côté latéral (1) du premier panneau en bois (10), de sorte que le ou les évidements (4.1, 4.2, 4.n) s'étendent sur une partie du premier côté latéral (1), et que le ou les évidements (4.1, 4.2, 4.n) soient délimités latéralement au moins en partie par des portions (13) du premier panneau en bois (10).

3. Procédé selon l'une des revendications 1 ou 2, comprenant une étape supplémentaire consistant à
- appliquer un composé d'étanchéité, par exemple un adhésif ou un silicone, sur les surfaces de contact des portions de délimitation (13) du premier panneau en bois, avant l'étape (i) de disposition des deux panneaux en bois (10, 20), et/ou de l'
- étanchéifier (202) les surfaces du premier panneau en bois (10) et du deuxième panneau en bois (20) se raccordant l'une à l'autre avant l'étape (ii) de remplissage.

4. Procédé selon l'une des revendications 1 à 3, dans lequel les surfaces du premier panneau en bois (10) et du deuxième panneau en bois (20) se raccordant l'une à l'autre sont disposées lors de l'étape (i) de telle sorte qu'elles soient fixées l'une à l'autre.

5. Procédé selon l'une des revendications 1 à 4, qui est un procédé au moins partiellement automatisé, dans lequel au moins l'étape (ii) consistant à remplir (203) le ou les creux est exécutée de manière automatisée.

6. Procédé selon l'une des revendications 1 à 5, dans lequel le ou les fonds plats du ou des évidements (4.1, 4.2, 4.n) occupent ensemble au moins 60 %, au moins 70 %, au moins 80 %, au moins 90 %, au moins 95 % ou au moins 98 % du premier côté latéral (1) du premier panneau en bois (10).

7. Procédé selon l'une des revendications 1 à 6, dans lequel le ou les évidements présentent une profondeur minimale de 1 mm, de 2 mm, de 3 mm, de 4 mm ou de 5 mm.

8. Procédé selon l'une des revendications 1 à 7, dans lequel la première face latérale du deuxième panneau en bois (20) présente soit une surface uniformément plane, soit une surface plane comportant un ou plusieurs évidements.

9. Procédé selon l'une des revendications 1 à 8, dans lequel le premier panneau en bois (10) et le deuxième panneau en bois (20) sont disposés de telle sorte que la cavité (3) formée par au moins un évidement entre le premier panneau en bois et le deuxième panneau en bois soit entièrement entourée par des portions de délimitation (13) du premier et, éventuellement, par des portions de délimitation du deuxième panneau en bois (20).

10. Procédé selon l'une des revendications 1 à 9, dans lequel les cavités (3) formées par le ou les évidements (4.1, 4.2, 4.n) sont remplies par injection de l'adhésif à deux composants dans une ouverture de remplissage (5) qui est disposée dans l'un des deux panneaux en bois (10, 20) et qui débouche dans la cavité (3).

11. Procédé selon l'une des revendications 1 à 10, dans lequel le premier panneau en bois (10) et le deuxième panneau en bois (20) présentent chacun deux côtés longitudinaux latéraux et deux côtés transversaux latéraux plus courts, et dans lequel les deux panneaux en bois (10, 20) sont reliés l'un à l'autre par l'intermédiaire d'un côté longitudinal latéral du premier panneau en bois (10) et d'un côté longitudinal latéral du deuxième panneau en bois (20), ou par l'intermédiaire d'un côté transversal latéral du premier panneau en bois (10) et d'un côté transversal latéral du deuxième panneau en bois (20).

12. Procédé selon l'une des revendications 1 à 11, dans lequel le durcissement (iii) (204) de l'adhésif à deux composants s'effectue sans pression.

13. Procédé selon l'une des revendications 1 à 12, dans lequel le procédé est mis en œuvre dans un premier lieu (L1), par exemple dans un site de production, et dans lequel le premier lieu (L1) est un lieu différent du lieu (L2), par exemple un chantier ou un bâtiment existant, où le panneau assemblé en bois (100) est utilisé.

14. Panneau assemblé en bois (100) pour structures de bâtiments, comprenant
(i) un premier panneau en bois porteur bidirectionnel (10) comprenant un ou plusieurs évidements (4.1, 4.2, 4.n) dans un premier côté latéral (1), lesdites évidements présentant un fond plat s'étendant sur une partie du premier côté latéral (1), les fonds du ou des évidements (4.1, 4.2, 4.n) occupant ensemble au moins 50 % du premier côté latéral (1) du premier panneau en bois (10), et les évidements (4.1, 4.2, 4.n) étant délimités latéralement au moins en partie par des portions (13) du premier panneau en bois porteur bidirectionnel,
(ii) un deuxième panneau en bois porteur bidirectionnel (20) comportant un premier côté latéral qui se raccorde au premier côté latéral (1) du premier panneau en bois porteur bidirectionnel (10), les premier et deuxième panneaux en bois formant ensemble un ou plusieurs cavités (3) définis respectivement par l'un des évidements (4.1, 4.2, 4.n),
(iii) la distance entre le fond d'au moins un évidement (4.1, 4.2, 4.n) du premier panneau en bois porteur bidirectionnel (10) et le côté du deuxième panneau en bois porteur bidirectionnel (20) délimitant la cavité (3) est d'au moins 1 mm, d'au moins 2 mm, d'au moins 3 mm, d'au moins 4 mm ou d'au moins 5 mm,
(iv) l'au moins une cavité (3) étant entièrement rempli d'une adhésif à deux composants, et
(v) au moins l'une des deux surfaces utiles (8) du premier panneau en bois porteur bidirectionnel (10) est adjacent à la surface utile correspondante (8) du deuxième panneau en bois à porteur bidirectionnel (20).
